# EUROPEAN PATENT SPECIFICATION

(11) **EP 1 030 991 B1**
(45) Date of publication and mention of the grant of the patent: **11.09.2002**
(21) Application number: 98959864.4
(22) Date of filing: 10.11.1998
(51) Int. Cl.: F16K 31/64

(54) **VALVE UNIT FOR THE ADJUSTMENT OF UNDER PRESSURE FLUID FLOW**
VENTILEINHEIT ZUR REGULIERUNG DES DURCHFLUSSES EINES DRUCKMITTELS
ENSEMBLE VANNE POUR LE REGLAGE D'UN DEBIT DE FLUIDE SOUS PRESSION

(30) Priority: 10.11.1997 IT VI970191
(43) Date of publication of application: 30.08.2000
(73) Proprietor: Pegoraro, Giorgio, 36100 Vicenza (IT)
(72) Inventor: Pegoraro, Giorgio, 36100 Vicenza (IT)
(74) Representative: Bonini, Ercole
(86) International application number: EP9807155
(87) International publication number: WO99024746

(56) References cited:
- DE-A1- 4 112 057
- FR-A3- 2 643 697

## Description

The invention concerns a valve unit, to be applied preferably but not exclusively at the entry of plants for liquid gases vaporization, or fluid as a whole, consisting in the adjustment of said fluid flow according to a thermostatic check using a feeler plunged in hot water flowing through the heat exchanger producing the vaporization and/or plunged in the gas coming from the vaporizer.

It is known to people skilled in the field that the vaporization process of some under pressure liquid gases requires, together with their expansion, the supplying of a certain heat amount.

This happens using a heat exchanger which usually is of the coil or tube nest type.

In the above-mentioned exchangers the liquid gas comes in through a flow adjustment valve and must come out in the dry saturated gas state in order to avoid explosions risks in the combustion chamber of the burner.

The vaporization of the liquid gas occurs through the absorption of the heat which is given by the hot water flow flowing inside said heat exchanger which will be called evaporator.

It can happen that, because of an excessive gas demand by the user, or because of a fall in temperature of the evaporator water, the gas coming out from is not completely in the dry saturated gas state.

In order to avoid the dangers relative to the start of a still damp gas burner and the consequent occurrence of gas pockets still in the liquid state, the current technics adopts substantially two systems, both based on the attempt of keeping unchanged the liquid gas level in the expansion chamber arranged just below the feeding valve of the gas itself and at the evaporator entry.

The first system carries out the check of the liquid gas level through the use of a float adjusting the opening degree of the gas input valve, according to the detected level.

Yet the check is not always effective because of the delay inserted in the answer of the adjusting system by the mechanic sensor formed by the float.

In order to avoid this drawback, in some plants a further safety electrovalve has been inserted. Said electrovalve is closed when a thermic sensor detects the fall in temperature of the water in the evaporator below a certain estimated lowest value.

Instead a second system carries out the check of the liquid gas level using a magnetic feeler controlling directly the gas input valve which is of the on-off electric control type.

In both the adopted solutions, the use of an electric check system require by law the realization of an explosion-proof plant, involving greater realization and administration charges.

In all the existing plants the liquid gas level in the expansion chamber is in any way subject to more or less wide oscillations.

Without any gas taking the liquid present in the same chamber, because of the heat slowly transmitted to it by the exchanger hot water, evaporates gradually making an anomalous overpressure.

In order to avoid the overcoming of dangerous limits, a small safety valve is always used . Said small valve allows the under pressure gas of bypassing the valve unit sending it back in the tank.

Said small safety valve is of a conventional type, with a seal plug nut and a gasket and, since it is inactive for a long time, it can block or fail to keep the pre-set calibration degree, running the risk of overpressuring the plant before its operating.

The present invention intends to overcome the said drawbacks.

Precisely, one of the aims of the present invention is that of realizing a valve unit carrying out the constant adjustment of the opening degree of the main input valve of the liquid gas according to a check of the thermostatic type of the temperature of the hot water present in the output line of the water itself from the evaporator.

It is another aim of said valve unit that of realizing the safety required conditions in the case of any irregularity, through the use of a second safety valve, for the blow-by of the under pressure gas, said valve should work purely mechanically, therefore avoiding the risk of explosions relative to the use of electrical circuits, and it should have a kind of shutter preventing in any case the blocking or un-calibration risks.

The said aims are achieved through the realization of a valve unit for the automatic adjustment of the under pressure fluid flow which, according to the main claim, includes:
- an input filter placed in the feeding line of the gas;
- an expansion chamber of the gas transmitting from the delivery line to the evaporator;
- check means of said gas flow;
characterized in that said check means include:
- a main valve put between said feeding line and said delivery line consisting of a first shutter cooperating with a thermostatic actuator in order to feed or intercept the flow through said expansion chamber;
- a safety valve, transmitting to said expansion chamber and provided with at least a second shutter intercepting at least an adduction line transmitting from said expansion chamber to said feeding line.

The said aims will be better pointed out later on, during the description of a preferred embodiment of the invention, given approximately but not restrictively, and shown in the enclosed drawings, where:
- FIG. **1** shows a global view of the valve unit of the invention applied to an evaporator entry;
- FIG. **2** shows an axial section of the same valve unit, with the main valve having a completely closed shutter;
- FIG. **3** shows the same section of the valve unit with a partially open shutter;
- FIG. **4** shows again the same section of the same valve unit with a completely open shutter;
- FIG. **5** shows the same axial section of the valve unit, with the run of the overpressured gas through the open safety valve.

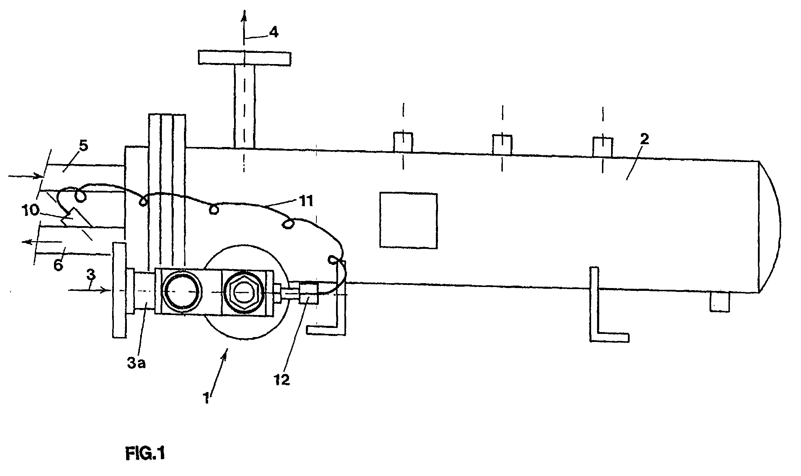

As it can be observed in FIG. **1**, the valve unit of the invention; marked with **1** as a whole, is applied at the entry of the evaporator **2,** which is substantially a heat exchanger.

Said heat exchanger can be both with a coil plunged in a hot water flow, and of the tube nest type.

In FIG. **1** example the evaporator in normal working condition, allows the coming out from above, according to arrow **4,** of the liquid gas coming in it according to arrow 3, with a flow adjusted by the valve unit 1, in a completely gaseous state to be sent to the burner.

The vaporization heat exchange occurs through the circulation inside the evaporator 2 of hot water inserted by the adduction line 5 and extracted by the line 6.

In the line **6** there is the thermostatic feeler **10**, connected to the capillary small pipe **11** working on the thermostatic actuator **12.** All said elements join the valve unit of the invention.

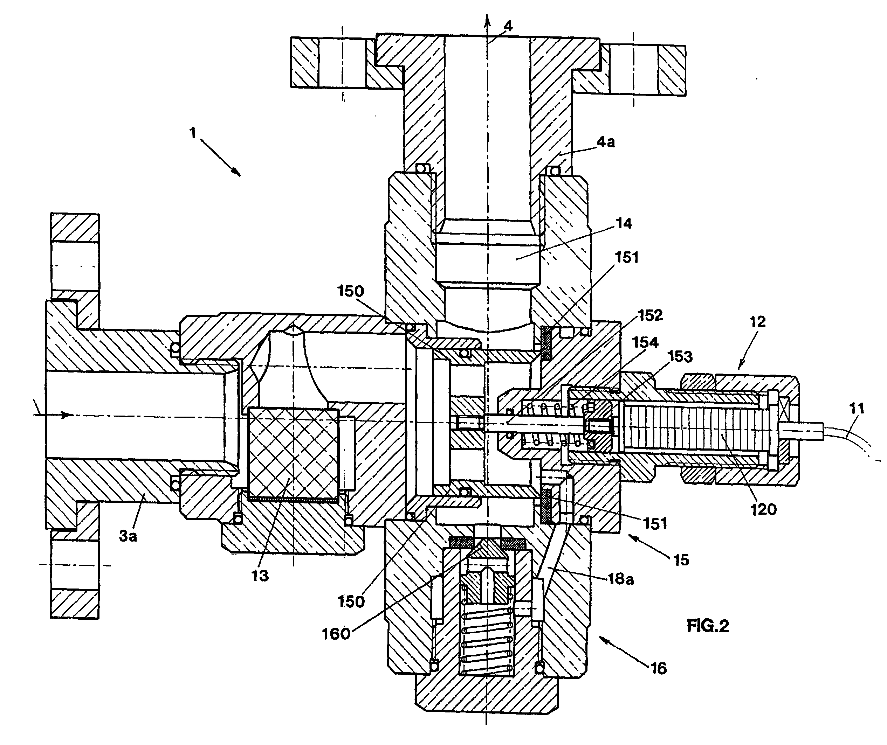

Said unit, shown in the following FIGs. **2, 3, 4** and **5** seen from above with respect to FIG. **1** position and according to median sections, includes a filter **13** of the known type, placed in correspondence with the feeding line **3a** of the liquid gas coming from the accumulation tank, and an expansion and connection chamber **14** transmitting from the delivery line to the evaporator.

The central part of the unit includes the main valve for the adjustment of the gas flow, marked with **15** as a whole, consisting of a first cylindrical shutter **150** contrasting the seal ring **151**.

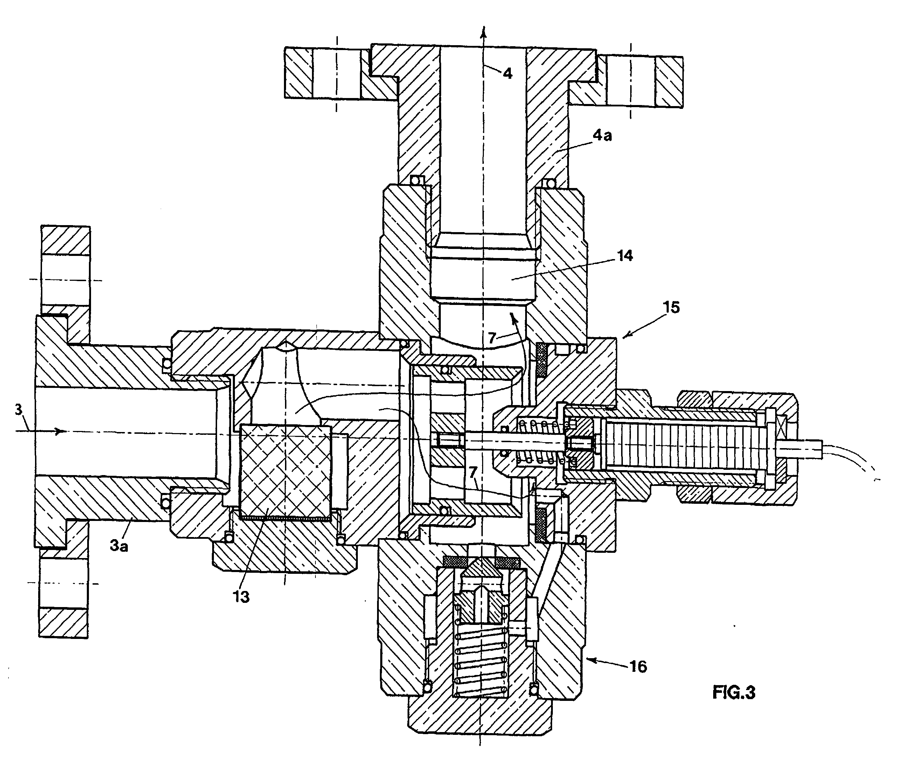

Said first shutter **150** is connected to the axial gudgeon **152** carrying out on it a continuous thrust action for realizing the gradual opening of the valve **15,** as it can be observed in FIG. **3,** against the reaction carried out by the spring **154,** compressed by the thermostatic actuator **12.**

Said thrust action is produced through the plunger **153** which is pushed by the bellows chamber **120** of the actuator as an effect of the expansion of the liquid present in the chamber itself. This is connected through the capillary **11** with the thermostatic feeler **10**.

In such a way, with the heating water with a intermediate temperature between the minimum and the maximum calibration of the plant, the first shutter **150** is partially open, and the result is the situation shown in FIG. **3**, where the outlet run of the liquid gas coming from the filter **13**, through the main valve **15**, toward the chamber **14** for the connection of the delivery line 4a to the evaporator **2**, is pointed out.

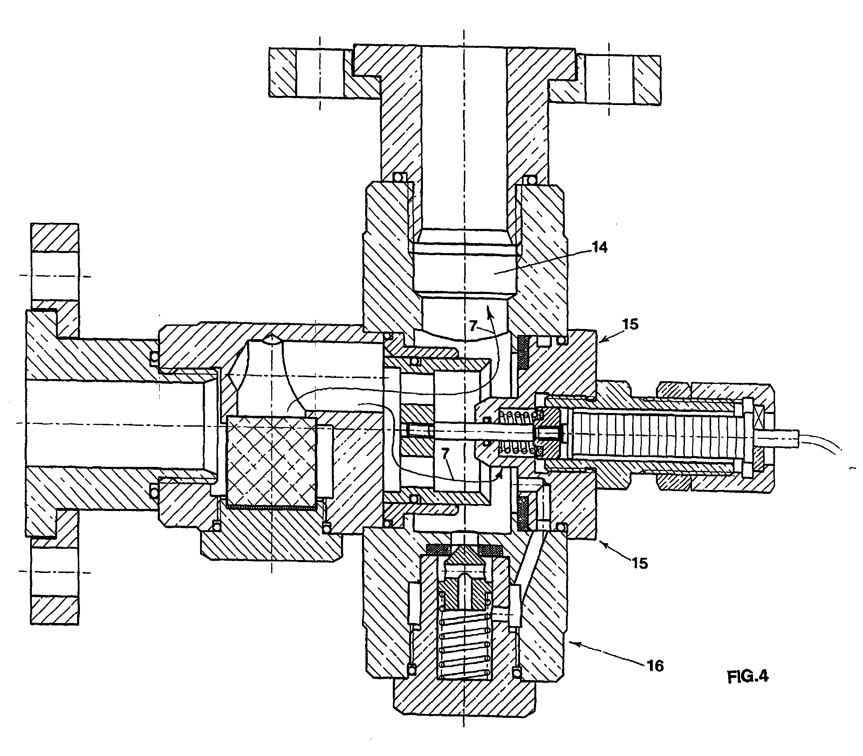

The greatest opening position of the first shutter **150** is shown in FIG. **4**; it corresponds to the highest taking of dry saturated gas allowed by the calibration of the hot water in the adduction line of the evaporator.

A higher gas taking is prevented by the temperature fall which would follow.

The said fall makes the shutter to close again as needed to reset the pre-set taking limit condition.

In a similar way the valve unit adjusts automatically the gas flow in the several intermediate positions of the shutter **150**, relative to the temperature of the water coming out from the exchanger, allowing therefore just the taking of a gas quantity consistent with its whole vaporization.

So one can be absolutely sure of taking at the evaporator outlet only dry saturated gas.

When the consumption is really reduced and the temperature of the water coming out from the exchanger allows the evaporation of the gas, the liquid gas stands above in the main valve **15** and in the expansion chamber **14** in which it vaporizes slowly and comes toward the feeding pipe **3a** through the shutter **150** still open.

The failure of the thermostatic unit, the gas taking stop, or other incidental causes, can nevertheless cause the whole closing of the shutter **150**.

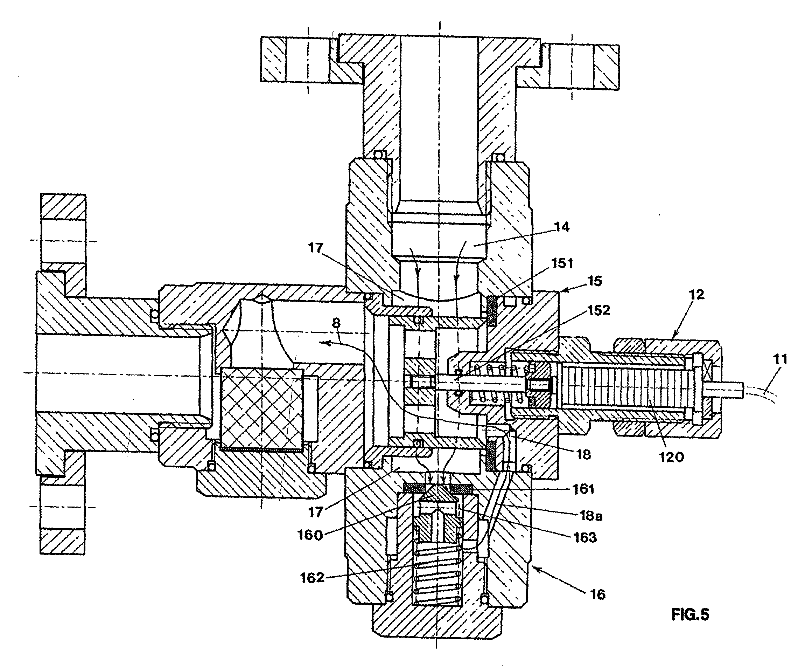

In such cases, in order to avoid that the growing evaporation of the liquid gas standing in the chamber **14** causes dangerous overpressures, the valve unit of the invention has a safety valve **16** which can be observed in FIG. **5** essentially consisting of a second conical shutter **160,** kept pressed against the cylindrical hole of the annular seal **161** by the thrust of the spring **162**.

Once a certain inside overpressure has been reached, the under pressure gas developing in chamber **14** goes in the communicating second annular chamber **17** surrounding the cylindrical shutter **150**, works on the conical shutter **160** of the safety valve **15** opening it, and gets in the circulation again running through the line **18**, going backwards with sense 8 through the cylindrical shutter **150**, provided with inside passages **150a** and unloading above the main valve **15** in the feeding line **3a**.

In such a way there is no risk either of reaching dangerous overpressures inside the plant, or of occurring liquid gas pockets inside the evaporator.

According to what has been explained above it can be understood that the valve unit of the invention can be used also in all the cases in which it is needed to adjust the flow of an under pressure fluid using a thermostatic check working by opening gradually the main valve according to the temperature increase of the fluid, without the use of electrical circuits.

The valve unit of the invention, preferably applied upstream the vaporizer, can be usefully set up downstream the vaporizer itself or even both upstream and downstream, according to the user's needs.

In the executive phase the shapes and quantity of the active elements of the valve unit can vary with respect to what has been described and shown in the enclosed drawings.

However it is stated that possible executive variants different from the described embodiment example are to be considered as protected by the appended claims.

## Claims

1. Valve unit (**1**) for the automatic adjustment of under pressure fluid flow, including:
- an input filter (**13**) placed in the feeding line (**3a**) of the gas;
- an expansion chamber (**14**) of the gas transmitting from the delivery line (**4a**) to the evaporator (**2**);
- check means (**15; 16**) of said gas flow;
**characterized in that** said check means include:
- a main valve (**15**) put between said feeding line (**3a**) and said delivery line (**4a**) consisting of a first shutter (**150**) cooperating with a thermostatic actuator (**12**) in order to feed or intercept the flow through said expansion chamber (**14**);
- a safety valve (**16**), transmitting to said expansion chamber (**14**) and provided with at least a second shutter (**160**) intercepting at least an adduction line (**18a**) transmitting from said expansion chamber (**14**) to said feeding line (**3a**).

2. Valve unit (**1**), according to claim 1), **characterized in that** it consists of a first shutter (**150**) of said main valve (**15**) having a cylindrical shape, contrasting against a seal ring (**151**) when it is closed, having an axial gudgeon (**152**) provided with a plunger (**153**) placed at its end and cooperating on one side with said thermostatic actuator (**12**) and on the opposed side with a contrasting spring (**154**).

3. Valve unit (**1**) according to claims 1) or 2), **characterized in that** said thermostatic actuator (**12**) includes a bellows chamber (**120**) which is connected through a capillary pipe (**11**) to said thermostatic feeler (**10**) inserted in the output line of the hot water (**6**) of the evaporator (**2**).

4. Valve unit (**1**) according to claim 1), **characterized in that** said second shutter (**160**) of said second safety valve (**16**) has a conical shape and is coupled in the hole of a seal plug nut (**161**) against which it is kept adherent by a thrust spring (**162**), said second shutter (**160**) housing in a small cylindrical chamber (**163**) communicating with said feeding line (**3a**) through an unloading line (**18**) leading into said first shutter (**150**).

5. Valve unit (**1**) according to claim 1), **characterized in that** it has an inside annular chamber (**17**) surrounding said first shutter (**150**) and transmitting to said expansion chamber (**14**) and said safety valve (**16**).

6. Valve unit (**1**) according to claim 4), **characterized in that** said first shutter (**150**) is internally hollow and has intermediate passages (**150a**) suitable to transmit from said unloading line (**18**) to said feeding line (**3a**).

## Patentansprüche

1. Ventileinheit (1) zur automatischen Regelung von unter Druck stehendem Fluidfluss, Folgendes umfassend:
- einen Zuflussfilter (13) in der Gaszufuhrleitung (3a);
- eine Expansionskammer (14) für das Gas, die von der Versorgungsleitung (4a) zum Verdampfer (2) leitet;
- Kontrollmittel (15; 16) für den Gasfluss;
**dadurch gekennzeichnet, dass** diese Kontrollmittel umfassen:
- ein Hauptventil (15) zwischen der Zufuhrleitung (3a) und der Versorgungsleitung (4a), bestehend aus einem ersten Verschluss (150), der mit einem thermostatischen Aktuator (12) zusammenwirkt, um den Fluss durch die Expansionskammer (14) zu speisen oder zu sperren;
- ein Sicherheitsventil (16), das zur Expansionskammer (14) leitet und mit wenigstens einem zweiten Verschluss (160) versehen ist, der wenigstens eine von der Expansionskammer (14) zur Zufuhrleitung (3a) führende Zuleitung (18a) absperrt.

2. Ventileinheit (1) nach Patentanspruch 1), **dadurch gekennzeichnet, dass** sie aus einem ersten Verschluss (150) des Hauptventils (15) von zylindrischer Form besteht, der gegen einen Dichtring (151) wirkt, wenn er geschlossen ist, und einen axialen Zapfen (152) mit einem Plunger (153) an seinem Ende aufweist und an einer Seite mit dem thermostatischen Aktuator (12) sowie am entgegengesetzten Ende mit einer Kontrastfeder (154) zusammenwirkt.

3. Ventileinheit (1) nach Patentanspruch 1) oder 2), **dadurch gekennzeichnet, dass** der thermostatische Aktuator (12) eine Faltenbagkammer (120) aufweist, die über ein Kapillarrohr (11) mit dem thermostatischen Fühler (10) verbunden ist, welcher an der Heißwasser-Auslassleitung (6) des Verdampfers (2) eingesetzt ist.

4. Ventileinheit (1) nach Patentanspruch 1), **dadurch gekennzeichnet, dass** der zweite Verschluss (160) des zweiten Sicherheitsventils (16) kegelförmig ist und in das Loch einer Dichtmutter (161) gefügt ist, gegen welche er anliegend gehalten wird durch eine Druckfeder (162), wobei dieser zweite Verschluss (160) in einer kleinen, zylindrischen Kammer (163) untergebracht ist, die durch eine in den ersten Verschluss (150) führende Entladungsleitung (18) mit der Zufuhrleitung (3a) kommuniziert.

5. Ventileinheit (1) nach Patentanspruch 1), **dadurch gekennzeichnet, dass** sie eine innere, ringförmige Kammer (17) aufweist, welche den ersten Verschluss (150) umgibt und zu der Expansionskammer (14) und dem Sicherheitsventil (16) leitet.

6. Ventileinheit (1) nach Patentanspruch 4), **dadurch gekennzeichnet, dass** der erste Verschluss (150) innen hohl ist und Zwischendurchgänge (250a) aufweist, die geeignet sind, aus der Abflussleitung (18) zur Zufuhrleitung (3a) zu leiten.

## Revendications

1. Groupe soupape (1) pour le réglage automatique du flux de fluides sous pression, comprenant:
- un filtre d'admission (13) positionné sur le conduit d'alimentation (3a) du gaz;
- une chambre d'expansion (14) du gaz conduisant du conduit de refoulement (4a) à l'évaporateur (2);
- des moyens de contrôle (15 ; 16) dudit flux de gaz;
**caractérisé en ce que** lesdits moyens de contrôle comprennent:
- une soupape principale (15) située entre ledit conduit d'alimentation (3a) et ledit conduit de refoulement (4a) composé d'une première fermeture (150) interagissant avec un actuateur thermostatique (12) de façon à alimenter ou intercepter le flux à travers ladite chambre d'expansion (14);
- une soupape de sécurité (16) conduisant à ladite chambre d'expansion (14) et munie d'au moins une deuxième fermeture (160) interceptant au moins un conduit d'adduction (18a) conduisant de ladite chambre d'expansion (14) audit conduit d'alimentation (3a).

2. Groupe soupape (1) selon la revendication 1) **caractérisé en ce qu'**il se compose d'une première fermeture (150) de ladite soupape principale (15) ayant une forme cylindrique, s'opposant à une bague d'étanchéité (151) quand elle est fermée, ayant un goujon axial (152) équipé d'un piston (153) situé à son extrémité et interagissant d'un côté avec ledit actuateur thermostatique (12) et du côté opposé avec un ressort d'opposition (154).

3. Groupe soupape (1) selon les revendications 1) ou 2) **caractérisé en ce que** ledit actuateur thermostatique (12) comprend une chambre à soufflet (120) qui est reliée à travers une cavité capillaire (11) à ladite sonde thermostatique (10) insérée dans le conduit d'évacuation de l'eau chaude (6) de l'évaporateur (2).

4. Groupe soupape (1) selon la revendication 1) **caractérisé en ce que** ladite deuxième fermeture (160) de ladite deuxième soupape de sécurité (16) a une forme conique et est reliée au trou d'un écrou d'étanchéité (161) contre lequel il est maintenu adhérent au moyen d'un ressort de poussée (162), ladite deuxième fermeture (160) étant logée dans une petite chambre cylindrique (163) communiquant avec ledit conduit d'alimentation (3a) à travers un conduit d'évacuation (18) conduisant à ladite première fermeture (150).

5. Groupe soupape (1) selon la revendication 1) **caractérisé en ce qu'il** présente une chambre annulaire interne (17) environnant ladite première fermeture (150) et conduisant à ladite chambre d'expansion (14) et à ladite soupape de sécurité (16).

6. Groupe soupape (1) selon la revendication 4) **caractérisé en ce que** ladite première fermeture (150) est creuse dans son partie intérieure et a des passages intermédiaires (150a) indiqués pour conduire dudit conduit d'évacuation (18) audit conduit d'alimentation (3a).
